# EUROPEAN PATENT SPECIFICATION

(11) **EP 3 475 530 B1**
(45) Date of publication and mention of the grant of the patent: **26.05.2021**
(21) Application number: 17758611.2
(22) Date of filing: 27.06.2017
(51) Int. Cl.: E21B 49/08, G01N 21/85, G01N 21/359, G01N 21/552

(54) **OPTICAL SENSOR**
OPTISCHER SENSOR
CAPTEUR OPTIQUE

(30) Priority: 27.06.2016 GB 201611147
(43) Date of publication of application: 01.05.2019
(73) Proprietor: Sondex Wireline Limited, Yately, Hants GU46 6AB (GB)
(72) Inventor: HAMBLIN, Christopher, Paul, Farnborough Hampshire GU14 0FG (GB); MARSHALL, Alan, Farnborough Hampshire GU14 0FG (GB); EATON, Stuart, John, Farnborough Hampshire GU14 0FG (GB)
(74) Representative: BRP Renaud & Partner mbB Rechtsanwälte Patentanwälte Steuerberater
(86) International application number: PCT/IB2017/000935
(87) International publication number: WO 2018/002712

(56) References cited:
- EP-A2- 0 122 741
- US-A1- 2012 081 699
- US-A1- 2013 016 336
- US-A1- 2015 029 509

## Description

The present invention relates to an optical sensor. The optical sensor may be suitable for determining relative proportions of a liquid and a gas that are present in the multiphase fluid. The optical sensor may, for example, form part of a downhole assembly for use within an oil or gas well.

US 2015/029509 A1 discloses a system to perform production logging down a well comprising a laser source (124) to generate electromagnetic radiation and a 50:50 coupler that splits the input and directs a first part to a reflector and a second part to a detector.

Oil and gas are typically extracted from beneath the Earth's surface via wells. Such wells are typically constructed by drilling a wellbore deep into the ground. A number of concentrically aligned tubular pipes, known as tubings or casings, are installed within the wellbore which penetrate to different depths below ground in order to facilitate the extraction of oil and gas from hydrocarbon producing formations of the Earth's crust. An annular gap is formed between each layer of the casings, each annulus typically containing pressurised fluid which remains within the annulus as a remnant of the drilling process. The central casing is typically known as a production tubing and is used to channel extracted oil from the well to the Earth's surface. The casings are typically secured to one another via a casing hanger located at a top portion of the well, referred to as a wellhead. A treehead is mounted above the wellhead, and typically contains an assembly of valves and pipes which regulate the flow of oil and gas from the well and the pressure of the fluid within each annulus.

Typically, the fluid, which is extracted via a well, is a multiphase fluid, for example comprising a mixture of oil and gas. The two different phases (i.e. the oil and gas) may, in general, not form a solution. Rather, the smaller constituent phase (for example gas) may be present as a plurality of bubbles within the larger constituent phase (for example oil). For relatively small bubble sizes, the multiphase fluid may behave as an emulsion whereas for larger bubble sizes the multiphase fluid can separate into layers.

In order to optimise the operation of a well, it can be useful to understand the relative proportions of oil and gas that are present within the well. In general, the different phases within the multiphase flow will move through the well at different speeds (for example due to different gravitational forces and frictional forces). In particular, the heavier phase will typically move more slowly or will be "held up" more than the lighter phase. In order to optimise operation of a well, it can be useful to understand the relative proportions of oil and gas that are present in the well, which may be referred to as the cut of the multiphase fluid. It may also be useful to determine the hold up and velocity of each phase constituent within the fluid. For this reason, an oil well may be provided with one or more downhole sensors. The downhole sensors may be operable to measure various properties within the well such as the composition and hold up of the fluid. For example, a downhole assembly may be provided for receipt within the production tubing of a well and may be provided with one or more downhole sensors operable to monitor ambient conditions within the production tubing. The downhole sensors may, for example, be optical sensors of the type that exploits the fact that the amount of total internal reflection from a sensing tip can be dependent on one or more ambient conditions of the sensing tip.

It will be appreciated that there are other applications where it can be useful to understand the relative proportions of the components of a multiphase fluid. For example, in the manufacture of fizzy drinks it may be useful to be able to determine a properties of said fizzy drinks such as, for example, the cut of such fizzy drinks.

It is an object of the present invention to provide an optical sensor which at least partially addresses one or more problems of the prior art, whether identified herein or elsewhere.

According to a first aspect of the invention there is provided a sensor for measuring a property, the sensor comprising: a radiation source operable to produce a radiation beam; a detector provided with a detecting surface for receiving radiation and outputting a signal in dependence on the received radiation, an aperture extending through the detector from the detecting surface to an opposed surface; and a sensing element operable to receive radiation and to reflect at least a portion of the radiation so as to form a reflected radiation beam, one or more properties of the reflected radiation beam being dependent on one or more properties to be measured; wherein the radiation source and the sensing element are disposed on opposite sides of the detector such that the radiation source is arranged to direct the radiation beam through the aperture to the sensing element and the sensing element is arranged to direct the reflected radiation beam to the detecting surface of the detector.

The first aspect of the invention provides a compact and efficient sensor. Providing an aperture in the detector and arranging the radiation source such that the radiation beam is directed through the aperture to the sensing element provides a particularly compact arrangement. In particular, it allows the radiation source and the detector to be disposed at substantially the same position such that the optical path of the radiation beam from the radiation source to the sensing element is substantially parallel to the optical path from the sensing element to the detector. This is more compact than prior art sensors, which typically use a beam splitter that is arranged to: (i) receive light from a laser and convey a portion (for example 50%) of the light to the sensing element; and (ii) receive reflected light from the sensing element and convey a portion (for example 50%) of the reflected light to the detector. Furthermore, the first aspect of the invention provides a more efficient arrangement whereby most of the radiation emitted by the radiation source is conveyed to the sensing element and most of the reflected radiation is conveyed to the detector.

The property to be measured may be a property of a medium within which the sensor is disposed. For example, the property to be measured may be indicative of the relative proportions of two different components of a multiphase fluid, for example oil and gas. This may be referred to as the cut of the multiphase fluid. For example, in one embodiment the property to be determined is a predominant phase of the multiphase fluid. For example, the predominant phase may be gas or liquid. That is, the sensor may be used to determine whether a multiphase fluid in which the sensor is disposed is predominantly a gas or predominantly a liquid. Alternatively, the property may be a quantity that is indicative of the cut of the multiphase fluid. Additionally or alternatively, the property to be measured may be the ambient temperature or pressure of the medium within which the sensor is disposed.

The one or more properties of the reflected radiation beam that are dependent on one or more properties to be measured may comprise the intensity of the reflected radiation beam. Additionally or alternatively, the one or more properties of the reflected radiation beam that are dependent on one or more properties to be measured may comprise the phase, polarisation, wavelength or transit time of the radiation within the sensing element.

The radiation source is disposed adjacent to the opposed surface of the detector and the sensing element is disposed adjacent to the detecting surface of the detector. It will be appreciated that as used in this context two adjacent members may be in contact or, alternatively, may be spaced apart from each other, for example by an air gap and/or by one or more insulating spacers or the like.

The sensing element may be arranged such that the cross sectional area of the reflected radiation beam is larger than the radiation beam it receives. This may be achieved by the sensing element having a diameter that is significantly larger than that of the radiation beam. For example, in an embodiment the sensing element may have a diameter of the order of 300 µm and the radiation beam may have a diameter of the order of 8 µm.

The radiation source may comprise a semiconductor laser diode. Such an arrangement may be beneficial since it allows for the generation of a radiation beam with a relatively small diameter, for example compared to other lasers. Reducing the dimensions of the radiation source allows the dimensions of the aperture to be reduced. In turn, this increases the active area of the detecting surface that can receive the reflected radiation. The laser diode may comprise gallium arsenide (GaAs) based laser diode. It will be appreciated that a wide range of different laser diodes may be used such as, for example, a vertical cavity surface emitting laser (VCSEL). The laser diode may operate at a wavelength of around 850 nm and may have a peak output power of the order of 4 mW.

The size of the aperture extending through the detector may be determined taking into account the following. The aperture may be sufficiently large to allow a sufficient quantity of radiation from the radiation source to be coupled to the sensing element for the reflected radiation beam to be resolvable by the detector. If the aperture is too small then there may be an insufficient intensity of radiation to be resolved by the detector. On the other hand, if the aperture is too large, there may be an insufficient active area on the detecting surface to allow the reflected radiation to be resolved. There may be an optimum aperture diameter or optimum aperture diameter range, which may be dependent on the output diameter and intensity of the radiation source and the diameter of the sensing element.

In some embodiments, the radiation source may comprise an optical element that is arranged to focus and/or collimate the radiation source. The optical element may comprise a lens.

The radiation source may be operable to emit a radiation beam with a diameter of 10 µm or less. For example, the radiation source may be operable to emit a radiation beam with a diameter of approximately 8 µm.

The detector may comprise a photodiode. This provides a fast response indication of the intensity of the reflected radiation. Alternatively, in other embodiments, the detector may comprise a plurality of sensing elements, which may be arranged in an array. Suitable sensing elements may, for example comprise photodiodes charged coupled devices (CCDs) and complementary metal-oxide-semiconductor (CMOS) sensors.

The sensing element may be a waveguide comprising a first end and a second end arranged such that at least a portion of radiation incident on the first end propagates along the sensing element to the second end, is reflected from the second end, propagates back to the first end and is emitted from the sensing element.

The sensing element may be formed from any material as desired or required. The sensing element may be formed from any material that is suitable for the environment within which the sensor will operate. For example, in some embodiments the sensor may be for use within a wellbore of an oil or gas well. Typically there may be sand or other debris suspended in the fluid within the wellbore, which may tend to abrade anything disposed in the fluid flow. Therefore, suitable materials may be hard materials that are particularly resistant to abrasion. It will be appreciated that the sensing element may be formed from materials with a wide range of hardness values but that relatively softer materials within this range may degrade more quickly than relatively harder materials within this range. For example, the sensing element may be formed from a material having a Mohs hardness of 7 or greater. A material having a Mohs hardness of 7 (for example silica glass) may be viable but may not result in a particularly long lifetime before the sensing element is sufficiently damaged that it needs to be replaced. Therefore, the sensing element may preferably be formed from a material having a Mohs hardness of greater than 7. Furthermore, suitable materials may be materials that can withstand the potentially high pressures and temperatures experienced in use. The sensing element may, for example, comprise sapphire, diamond, ruby or glass. For other applications of the sensor, the sensing element may be formed form other materials.

The sensor may further comprise a ferrule arranged to support the sensing element comprises. The ferrule may be formed from metal or a ceramic. The ferrule may be formed from a material that has a higher refractive index than that of the sensing element. Therefore, for such embodiments, the ferrule may help to guide radiation along the sensing element.

The sensor may further comprise a housing within which the radiation source and the detector are received. The housing may be of the form of a known type of encapsulating material for integrated circuits. In some embodiments, the housing may comprise a plastics coating and/or a metal casing. The housing may be generally of the form of a transistor outline package (TO package). For example, the housing may be of the form of a modified version of a TO-18 package. In particular, the housing may comprise a header plate and a cap. The header plate and the cap may cooperate to define an internal volume. The radiation source and the detector may be mounted on a surface of the header plate and an opposed surface of the header plate may be provided with one or more pins which provide electrical connections to the radiation source and the detector. The cap may be connected to the header plate so as to enclose the radiation source and the detector and may be hermetically sealed. The sensing element may form part of the cap such that the sensing element provides a window in the housing. Such an arrangement can protect the radiation source and detector from damage while allowing electrical connection to them via the one or more pins.

The sensor may further comprise one or more ambient conditions sensing elements operable to output a signal indicative of one or more ambient conditions. For example, in some embodiments, the sensor may further comprise an ambient temperature sensor. The ambient temperature sensor may, for example, comprise a thermistor.

The one or more properties of the reflected radiation beam may be further dependent on one or more ambient conditions, which may be determined using the one or more ambient conditions sensors. For example, the intensity of light reflected by the sensing element may, in general, be dependent on the intensity of the radiation beam emitted by the radiation source. In turn, this may be dependent on the ambient temperature of the radiation source and/or the sensing element. For such embodiments, the ambient conditions sensing elements (for example the ambient temperature sensor) may be used to calibrate the sensor such that the property to be measured can be determined.

This is beneficial over prior art arrangements that monitor the output of the radiation source directly, since it is a more compact arrangement. This is because it does not require, for example, a beam splitter arranged to split the radiation beam into two portions or a detector operable to monitor the intensity of one of the two portions.

An area of the detecting surface may be a factor of four or more greater than the area of the aperture that extends through the detector. For example, the area of the detecting surface may be around a factor of ten or more greater than the area of the aperture that extends through the detector. In one embodiment, the diameter of the detecting surface may be of the order of 500 µm and the diameter of the aperture may be of the order of 50 µm.

According to a second aspect of the invention there is provided an oil or gas well comprising: a wellbore; and a sensor according to the first aspect of the invention disposed within the wellbore.

Various aspects and features of the invention set out above or below may be combined with various other aspects and features of the invention as will be readily apparent to the skilled person.

Specific embodiments of the present invention are described below, by way of example only, with reference to the accompanying drawings, in which:
Figure 1 is a schematic side view of a well within which is disposed a downhole sensing assembly according to the present invention;
Figure 2 is an enlarged schematic side view of the downhole sensing assembly shown in Figure 1;
Figure 3a is an enlarged perspective view of a first portion of the downhole sensing assembly shown in Figure 2;
Figure 3b is an enlarged perspective view of a second portion of the downhole sensing assembly shown in Figure 2;
Figure 3c is an enlarged perspective view of a third portion of the downhole sensing assembly shown in Figure 2; and
Figure 4 is a schematic cross sectional view of sensor according to an embodiment of the invention that forms part of the downhole sensing assembly shown in Figure 2.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

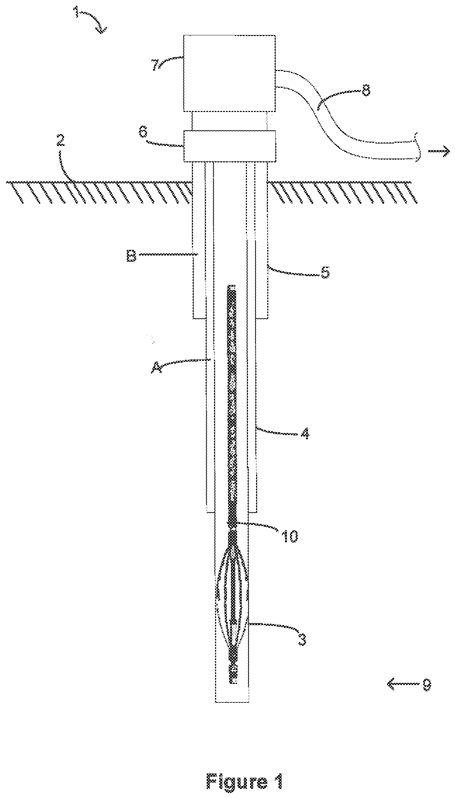

Figure 1 is a schematic cross-section of a side view of a well. In particular, Figure 1 shows a well 1 located on a surface 2 of the Earth's crust. The well 1 may be located on land or may be located underwater, in which case the surface 2 is a seabed. The well 1 comprises a wellbore containing a production tubing 3, an intermediate casing 4 and an outer casing 5. The production tubing 3 and casings 4, 5 are each formed as a substantially tubular member having a hollow central portion through which fluid may flow. The production tubing 3 has an outer diameter which is smaller than an inner diameter of the intermediate casing 4 so as to form an annular gap A. Similarly, the intermediate casing 4 has an outer diameter which is narrower than an inner diameter of the outer casing 5 so as to form an annular gap B. The production tubing 3, intermediate casing 4, and outer casing 5 are connected at a wellhead 6 located at the surface 2. The tubing 3 and/or casings 4, 5 typically comprise a hanger portion (not shown) located at an end of the tubing 3 and/or casings 4, 5 closest to the surface 2, which is received within the wellhead 6 so as to secure the tubing 3 and/or casings 4, 5 to the wellhead 6 and to allow the tubing 3 and/or casings 4, 5 to hang within the well 1. A treehead 7 is located above the wellhead 6 and is connected to a pipeline 8.

The production tubing 3 penetrates a formation 9 of the Earth's crust containing oil and/or gas for extraction. The extracted oil and/or gas, sometimes referred to as production fluid, is channelled to the surface 2 via the central portion of the production tubing 3. The production fluid may rise from the formation 9 to the surface 2 via the production tubing 3 under the action of pressure applied by the Earth on the formation 9, or may be extracted from the well 1 via a pump (not shown). At the surface 2, the production fluid passes through the wellhead 6 and into the treehead 7. The treehead 7 is arranged to regulate the flow of the production fluid, and to channel the production fluid out of the well 1 via the pipeline 8. The production fluid is then carried away from the well by the pipeline 8 for storage or processing down-stream (not shown).

It will be appreciated that although Figure 1 shows a well 1 comprising a treehead 7, the well 1 may alternatively comprise a different pressure containing or controlling device which is functionally equivalent to the treehead, such as for example a blow-out preventer or a pressure control cap. It will further be appreciated that the treehead 7 may be either a vertical-type treehead or a horizontal-type treehead.

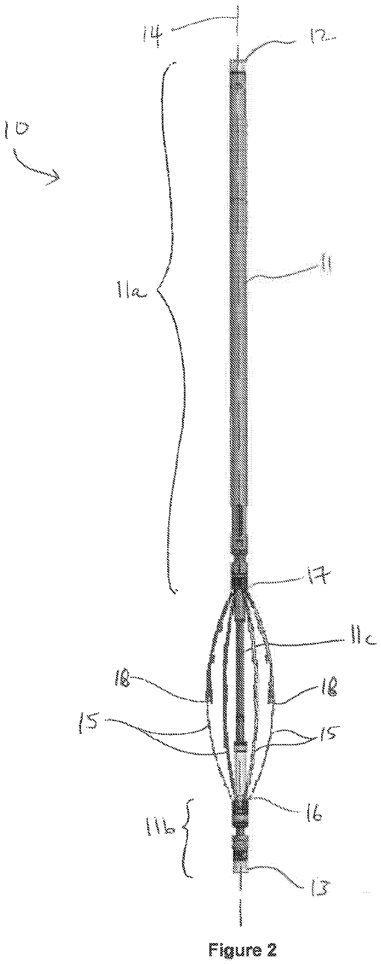

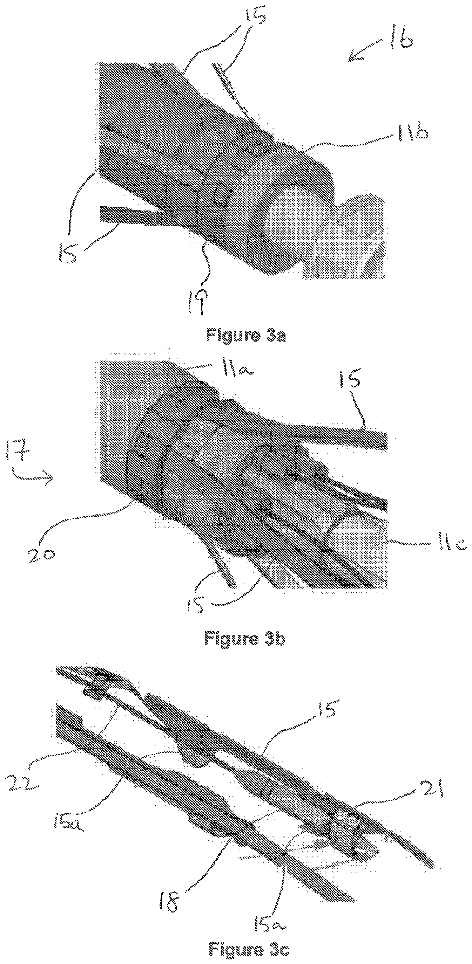

As also shown schematically in Figure 1, a downhole sensing assembly 10 may be received within production tubing 3. The downhole sensing assembly 10 will be described further now with reference to Figures 2, 3a, 3b and 3c.

As can be seen from Figure 2 the downhole sensing assembly 10 comprises a generally elongate body 11 which extends between two opposed ends 12, 13. An axis 14 of the body 11 extends generally from a first end 12 of the body to a second end 13 of the body 11.

Proximate to the second end 13 the downhole sensing assembly 10 comprises six arcuate spring arms 15 (only four of the spring arms are visible in Figure 2). The spring arms 15 are substantially evenly spaced circumferentially about the axis 14 of body 11. Each spring arm 15 extends between a first connection point 16 proximate to the second end 13 of body 11 to a second connection point 17. The first and second connection points 16, 17 are provided at different axial positions on the body 11. Therefore, each spring arm 15 extends generally axially between the first connection point 16 and the second connection point 17. Each spring arm 15 is generally arcuate such that a central portion of the spring arm 15 (i.e. a portion of the spring arm disposed axially between the two end points 16, 17) is disposed radially outboard of the first and second connection points 16, 17.

The body 11 comprises three portions: a first end portion 11a, a second end portion 11b and a central portion 11c. The first end portion 11a extends generally from the first end 12 of the body 11 to the second connection point 17. The second end portion 11b extends generally from the first connection point 16 to the second end 13 of the body 11. The central portion 11c extends between the first and second end portions 11a, 11b.

An optical sensor 18 is supported on a radially inner surface of each of the spring arms 15. In particular, each sensor 18 is supported at a central portion of its corresponding spring arm 15.

In use, the body 11 is inserted into the production tubing 3, with the second end 13 of the body 11 being inserted into the production tubing 3 first. Typically, the whole of the body 11 of downhole sensing assembly 10 is received within production tubing 3. Because each spring arm 15 curves or bulges radially outwards from the axis 14 of body 11 (i.e. such that a central portion of each spring arm 15 is disposed radially outboard of the main body 11) each of the sensors 15 is disposed proximate to an inner surface of the production tubing 3. Each of the spring arms 15 is resiliently deformable towards the axis 14 of the body 11. Therefore if, as the downhole sensing assembly 10 is inserted into production tubing 3, it encounters a restriction the spring arms 15 can be deformed radially inward to account for the restriction. Such an arrangement wherein the sensors 18 are disposed proximate to an inner surface of production tubing 3 distributes the sensors 18 across the cross-section of the production tubing 3. Advantageously, this allows variations in liquid and/or gas content to be monitored across the cross-section of the well 1. Since the sensors 18 are supported on a radially inner surface of each spring arm 15, the spring arms 15 provide some protection for the, potentially fragile or sensitive, sensors 18 in the event that the downhole sensing assembly 10 encounters a restriction within the production tubing 3.

Since each of the spring arms 15 is resiliently deformable, once the downhole sensing assembly 10 passes a restriction (either when passing up or down production tubing 3) the spring arms 15 will return to their equilibrium positions. Advantageously, the spring arms 15 therefore bias the sensors 18 towards the inner surface of production tubing 3 but allow the downhole sensing assembly 10 to negotiate past restrictions without damaging the sensors 18.

As can be seen from Figure 3a, at the first connection point 18 each spring arm 15 connects to the second end portion 11b of the body 11 via a generally ring shaped connector 19. Similarly, as can be seen from Figure 3b, each spring arm 15 connects to the first end portion 11a of the body 11 via a second generally ring shaped connector 20.

As can be seen from Figure 3c, each sensor 18 connects to its corresponding spring arm 15 by way of one or more flanges 15a provided on spring arm 15 and a retaining clip 21.

As can be seen in Figures 3b and 3c the downhole sensing assembly 10 further comprises a physical link 22 for each sensor 18. Each physical link 22 extends from the main body 11 of the downhole sensing assembly 10 to a different one of the six sensors 18. The physical link 22 comprises one or more wires enclosed in protective tube. The one or more wires may each be provided with an insulating sheath. The protective tube may be formed from any material that is suitable for the environment, for example the environment within the production tubing 3. For example, the protective tube may be formed from titanium. The physical link 22 therefore provides an electric and/or optical link between each of the sensors 18 and the main body 11.

The body 11 is designed to withstand the operating potentially conditions (for example high temperature and high pressure) experienced within the production tubing 3. The first end portion 11a of the body 11 houses control electronics operable that are to: send control signals to each sensor 18 and receive response signals from each of the sensors 18. The control electronics may comprise a driver circuit for the sensors 18. The control electronics may comprise a detector circuit for the receiving signals from the sensors 18. The control electronics may comprise a data processing mechanism (for example a microcontroller or the like). The control electronics further comprises a telemetry module operable to send signals from the downhole sensing assembly 10 to a remote location. These signals may be sent using wireless communication techniques or one or more physical links (for example between the downhole sensing assembly 10 and a device on the surface 2).

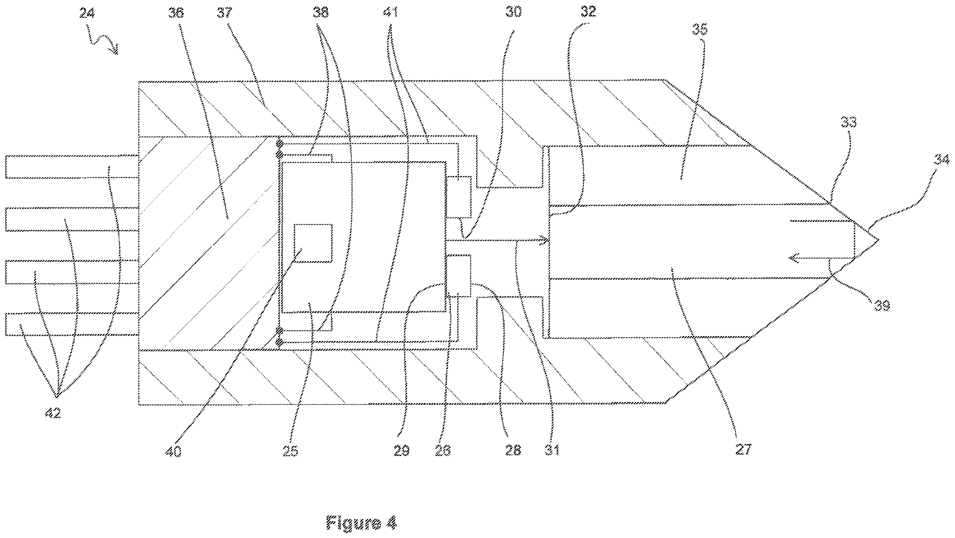

Figure 4 shows, schematically, a cross-section through a sensor 24 according to an embodiment of the present invention. Each of the sensors 18 described above with reference to the downhole sensing assembly 10 shown in Figures 2, 3a, 3b and 3c may be generally of the form of the sensor 24 shown in Figure 4.

The sensor 24 is an optical sensor and is suitable for measuring one or more properties within the well 1. The sensor 24 comprises a radiation source 25, a detector 26 and a sensing element 27. The radiation source 25 is a laser and may, for example, comprise a laser diode. The detector 26 is provided with a detecting surface 28 for receiving radiation and outputting a signal in dependence on the received radiation. The detector 26 may, for example, comprise a photodiode. An aperture 30 extends through a body of the detector 26 from the detecting surface 28 to an opposed or rear surface 29.

In use, the radiation source 25 is operable to produce a laser beam 31. For example, radiation source 25 may comprise a laser diode that is operable to produce a laser beam 31 with a diameter of approximately 8 µm. Such a laser diode may produce a highly collimated laser beam 31 with a relatively small diameter and divergence. The radiation source 25 is disposed proximate to the opposed surface 29 of the detector 26 and is arranged such that the laser beam 31 propagates through the aperture 30 formed in the body of the detector 26. For example, the radiation source 25 may be mounted on, or connected to, the opposed surface 29 of the detector 26. For example, the radiation source 25 may be connected to the opposed surface 29 of the detector 26 using a suitable adhesive. An insulating layer or one or more insulating spacers may be provided between the radiation source 25 and the detector 26.

The aperture 30 in the detector may for example have a diameter of approximately 50 µm. In one embodiment the detector may be a photo diode with an active area on the detecting surface 28 having a diameter of the order of 500 µm. The aperture 30 may have a diameter of the order of 50 µm and may be formed, for example, by laser drilling.

The sensing element 27 comprises an optical waveguide and is arranged to receive the laser beam 31 that is emitted by the radiation source 25 and propagates through the aperture 30. The waveguide of sensing element 27 extends from a first end 32, which is arranged to receive the laser beam 31, and a second end 33. At the second end 33, the waveguide is provided with a sensing tip 34. A portion of the waveguide extending between the first and second ends 32, 33 may for example have a diameter of the order of 300 µm.

The sensing tip 34 is pointed such that the sensing tip 34 encourages total internal reflection of radiation, as indicated generally by arrow 39. As the radiation beam 31 propagates into the sensing element 27, it is guided from the first end 32 to the second end 33. At least a portion of the radiation is reflected from the sensing tip 34 and propagates back towards the first end 32. One or more properties of the reflected radiation beam are dependent on the medium within which the sensing tip 34 is disposed. In particular, the amplitude of the light beam reflected by the sensing tip 34 is dependent on whether the sensor tip is immersed in a liquid (for example oil) or a gas. This is due to the different optical properties of oil and gas. In particular, the refractive indices of oil and gas are different. The amount of light reflected by the sensing tip 34 is dependent on the difference in the refractive indices of the sensing element 27 and the medium within which the sensing tip 34 is disposed. Since the refractive index of the sensing element 27 is fixed (for a given temperature and pressure), the difference in the refractive indices of oil and gas result in different amounts of reflected light. A high reflected signal indicates a large proportion of gas whereas a low reflected signal indicates a large proportion of oil.

The diameter of the waveguide formed by the sensing element is larger than that of the laser beam 31 emitted by the radiation source 25. For example, the waveguide may have a diameter of approximately 300 µm and the laser beam 31 may have a diameter in the range of approximately 8 µm to 50 µm. As the radiation propagates through the waveguide, the radiation will spread out as it is reflected through the waveguide. Therefore, the sensing element 27 is arranged such that the cross sectional area of the reflected radiation beam is larger than the radiation beam 31 it receives from the radiation source 25. The reflected radiation may be generally uniformly distributed across the cross section of the sensing element 27 as the reflected radiation exits the first end 32 of the sensing element 27.

The sensing element 27 may be formed from any material that transmits light and which is suitable for the environment within which the sensor 24 is disposed in use. For example, the sensing element 27 may be formed from a material that is suitable for use within the production tubing 3. Typically there may be sand or other debris suspended in the fluid within the production tubing 3, which may tend to abrade anything disposed in the fluid flow. Therefore, suitable materials may be hard materials that are particularly resistant to abrasion. Additionally, suitable materials may be materials that can withstand the potentially high pressures and temperatures experienced in use. Suitable materials may comprise sapphire, diamond, ruby and glass (although it will be appreciated that other materials may also be suitable).

The sensing element 27 is provided in a ferrule 35, which provides support for the sensing element 27. The ferrule 35 may also aid in the guiding of radiation along the sensing element 27, i.e. the ferrule 35 may be formed from a material with a higher refractive index than that of the sensing element 27. The ferrule may be formed from any suitable material, examples of which may include metals or ceramics.

The intensity of light reflected by the sensing element 27 is, in general, dependent on the intensity of the radiation beam 31 emitted by the radiation source 25. In turn, this may be dependent on the ambient temperature of the radiation source 25 and the temperature of the sensing element 27. Therefore, optionally, the sensor 25 may further comprise a temperature sensor (indicated schematically as reference 40). The temperature sensor 40 may, for example, comprise a thermistor. The temperature sensor 40 is arranged to determine the ambient temperature of the radiation source 25 and/or the sensing element 27. The ambient temperature of the radiation source 25, as determined by the temperature sensor 40, may be used to calibrate the sensor 24 such that the property to be measured (for example the cut of a multiphase fluid) can be determined. For example control electronics (for example as housed in the first end portion 11a of body 11) may be operable to implement a temperature compensation algorithm of the like.

Alternatively, in other embodiments, the sensor 24 may have no temperature sensor. For such embodiments, a separate temperature sensor may be used to calibrate the output of the sensor 24. For example, as already described, the downhole sensing assembly 10 comprises six sensors 18, each of which may be of the form of the sensor 24 shown in Figure 4. Each of the sensors 18 may output a signal to control electronics, which may, for example, be housed within main body 11. One or more separate temperature sensors may also provide a signal indicative of an operating temperature of one or more of the sensors 18. The control electronics may use this signal to calibrate the output of the one or more of the six sensors 18.

The sensor 24 further comprises a housing. The housing may be of the form of a known type of encapsulating material for integrated circuits.

The housing may be a customised housing which is generally of a similar form to a transistor outline package (TO package). For example, the housing may be of the form of a modified version of a TO-18 package. In particular, the housing may comprise a header plate 36 and a cap 37. As explained above, the radiation source 25 may comprise a laser diode and the detector 26 may comprise a photodiode. The radiation source 25 and the detector 26 may therefore each be formed from a silicon wafer die. The two dies may be connected together using a suitable adhesive, with one or more insulating spacers being provided therebetween. The radiation source 25 and the detector 26 may be mounted on a surface of the header plate 36. For this purpose, each of the radiation source 25 and the detector 26 is provided with a pair of solder pads which are connected to the header plate 36 using a known process such as, for example, wire bonding or flip-chip. This connection is shown schematically in Figure 4 with the radiation source 25 being connected to the header plate 36 via a pair of wires 38 and the detector 26 being connected to the header plate 36 via a pair of wires 41. For embodiments wherein the sensor 24 comprises a temperature sensor 40, the temperature sensor 40 may be mounted on a surface of the header plate 36 in a similar fashion to the radiation source 25 and the detector 26.

The header plate 36 is provided with a plurality of pins 42, which extend from a surface of the header plate that is opposed to the surface to which the radiation source 25 and detector 26 are connected. The sensing element 27 and the ferrule 35 form part of the cap 36. The sensing element 27 provides a window in the housing that optically couples an interior of the housing to an exterior of the housing. The cap 37 is connected to the header plate 36 so as to enclose the radiation source 25 and the detector 26. The cap 37 and the header plate 36 may form a hermetically sealed housing. In this way, the radiation source 25 and detector 26 may be protected by the housing 36, 37.

The pins 42 may be connected to control electronics within the body 11 via physical links 22. The detector 26 is operable to output a signal via one or more of the pins 42 which are electrically coupled to the pair of wires 41 in dependence on the received radiation by detecting surface 28. This signal is sent to control electronics within the body 11 via physical links 22. Similarly, the control electronics are operable to send a control signal to the radiation source 25 via one or more of the pins 42 which are electrically coupled to the pair of wires 38 so as to control the emission of the radiation beam 31. The control signal is sent from the control electronics within the body 11 via physical links 22.

The sensor 24 provides a compact and efficient sensor. Providing an aperture 30 in the detector 26 and arranging the radiation source 25 such that the radiation beam 31 is directed through the aperture 30 to the sensing element 27 provides a particularly compact arrangement. In particular, it allows the radiation source 25 and the detector 26 to be disposed at substantially the same position such that the optical path of the radiation beam 31 from the radiation source 25 to the sensing element 27 is substantially parallel to the optical path of reflected radiation from the sensing element 27 to the detector 26. This is more compact than prior art sensors, which typically use a beam splitter that is arranged to: (i) receive light from a laser to convey a portion (for example 50%) of the light to the sensing element; and (ii) receive reflected light from the sensing element to convey a portion (for example 50%) of the reflected light to the detector.

Furthermore, the sensor 24 provides a more efficient arrangement whereby most of the radiation emitted by the radiation source 25 is conveyed to the sensing element 27 and most of the reflected radiation is conveyed to the detector 26. Therefore, the sensor 24 allows a significantly higher fraction of the radiation emitted by the radiation source 25 to be received by the detector 26. For example, of the order of 90% of the radiation emitted by the radiation source 25 can be measured by the detector 26. In turn, this may allow for a lower power radiation source 25 to be used and/or for a better sensor response to be achieved relative to such prior art arrangements.

It will be appreciated that a radiation source is a source operable to emit radiation, for example electromagnetic radiation. The radiation may comprise visible light. Alternatively, the radiation may comprise electromagnetic radiation outside of the visible spectrum, for example infrared radiation. It will be appreciated that in the above description the term "radiation" is synonymous with the term "light". Any reference to light may therefore encompass electromagnetic radiation outside of the visible spectrum.

Although in the above embodiment, the downhole sensing assembly 10 comprises six sensors 18, it will be appreciated that in alternative embodiments fewer than six or more than six sensors may be provided.

The above-described sensors 24 can be used to determine a cut of a multiphase fluid (i.e. the relative proportions of a liquid and a gas that are present in the multiphase fluid). As described above, the sensors 24 may be suitable for use as part of a downhole sensing assembly 10 for use within an oil or gas well 1. It will be appreciated that sensors 24 according to embodiments of the invention may be used for other purposes and, in particular, may be used to the cut of the cut of other multiphase fluids. For example, the sensors 24 may be used in the manufacture of fizzy drinks to determine a cut of said fizzy drinks.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. A sensor (24) for measuring a property, the sensor comprising:
a radiation source (25) operable to produce a radiation beam;
a detector (26) provided with a detecting surface (28) for receiving radiation and outputting a signal in dependence on the received radiation, and
a sensing element (27) operable to receive radiation and to reflect at least a portion of the radiation so as to form a reflected radiation beam, one or more properties of the reflected radiation beam being dependent on one or more properties to be measured;
**characterized by** an aperture (30) extending through the detector (26) from the detecting surface (28) to an opposed surface; and
wherein the radiation source (25) and the sensing element (24) are disposed on opposite sides of the detector (26) such that the radiation source (25) is arranged to direct the radiation beam through the aperture (30) to the sensing element (27) and the sensing element (27) is arranged to direct the reflected radiation beam to the detecting surface of the detector (26).

2. The sensor of claim 1 wherein the radiation source (25) comprises a laser diode.

3. The sensor of any preceding claim wherein the detector (26) comprises a photodiode.

4. The sensor of any preceding claim wherein the sensing element (27) is a waveguide comprising a first end (32) and a second end (33) arranged such that at least a portion of radiation incident on the first end (32) propagates along the sensing element (27) to the second end (33), is reflected from the second end (33), propagates back to the first end (32) and is emitted from the sensing element (27).

5. The sensor of claim 4 wherein the sensing element (27) comprises a sensing tip (34) disposed at the second end (33).

6. The sensor of any preceding claim wherein the sensing element (27) comprises sapphire, diamond, ruby or glass.

7. The sensor of any preceding claim wherein the sensing element (27) comprises a material having a Mohs hardness of 7 or greater.

8. The sensor of any preceding claim further comprising a ferrule (35) arranged to support the sensing element (27).

9. The sensor of any preceding claim further comprising a housing (36,37) within which the radiation source (25) and the detector (26) are received.

10. The sensor of claim 9 wherein the housing comprises a header plate (36) and a cap (37) that cooperate to define an internal volume, the radiation source (25) and the detector (26) being mounted on a surface of the header plate (36) and the sensing element (27) forming part of the cap (37).

11. The sensor of claim 9 or claim 10 wherein the housing (36,37) is hermetically sealed.

12. The sensor of any preceding claim further comprising one or more ambient conditions sensing elements operable to output a signal indicative of one or more ambient conditions.

13. The sensor of any preceding claim wherein an area of the detecting surface (28) is a factor of four or more greater than the area of the aperture (30) that extends through the detector (26).

14. A downhole sensing assembly (10) comprising:
a body (11); and
at least one sensor (24) according to any preceding claim mounted on the body.

15. An oil or gas well comprising:
a wellbore; and
a downhole sensing assembly (10) according to claim 14 disposed within the wellbore.

## Patentansprüche

1. Sensor (24) zum Messen einer Eigenschaft, wobei der Sensor umfasst:
eine Strahlungsquelle (25), die betriebsfähig ist, um einen Strahlungsstrahl zu erzeugen;
einen Detektor (26), der mit einer Erfassungsfläche (28) zum Empfangen von Strahlung und Ausgeben eines Signals in Abhängigkeit von der empfangenen Strahlung versehen ist, und
ein Erfassungselement (27), das betriebsfähig ist, um Strahlung zu empfangen und mindestens einen Teil der Strahlung zu reflektieren, um einen reflektierten Strahlungsstrahl zu bilden, wobei eine oder mehrere Eigenschaften des reflektierten Strahlungsstrahls von einer oder mehreren zu messenden Eigenschaften abhängig sind;
**gekennzeichnet durch** eine Öffnung (30), die sich durch den Detektor (26) von der Erfassungsoberfläche (28) zu einer gegenüberliegenden Oberfläche erstreckt; und
wobei die Strahlungsquelle (25) und das Erfassungselement (24) auf gegenüberliegenden Seiten des Detektors (26) angeordnet sind, sodass die Strahlungsquelle (25) angeordnet ist, um den Strahlungsstrahl durch die Öffnung (30) zum Erfassungselement (27) zu lenken, und das Erfassungselement (27) angeordnet ist, um den reflektierten Strahlungsstrahl zur Erfassungsoberfläche des Detektors (26) zu lenken.

2. Sensor nach Anspruch 1, wobei die Strahlungsquelle (25) eine Laserdiode umfasst.

3. Sensor nach einem der vorstehenden Ansprüche, wobei der Detektor (26) eine Fotodiode umfasst.

4. Sensor nach einem der vorstehenden Ansprüche, wobei das Erfassungselement (27) ein Wellenleiter ist, der ein erstes Ende (32) und ein zweites Ende (33) umfasst, die so angeordnet sind, dass sich mindestens ein Teil der am ersten Ende (32) einfallenden Strahlung entlang des Erfassungselements (27) zum zweiten Ende (33) ausbreitet, vom zweiten Ende (33) reflektiert wird, sich zurück zum ersten Ende (32) ausbreitet und vom Erfassungselement (27) emittiert wird.

5. Sensor nach Anspruch 4, wobei das Erfassungselement (27) eine Erfassungsspitze (34) umfasst, die am zweiten Ende (33) angeordnet ist.

6. Sensor nach einem der vorstehenden Ansprüche, wobei das Sensorelement (27) Saphir, Diamant, Rubin oder Glas umfasst.

7. Sensor nach einem der vorstehenden Ansprüche, wobei das Sensorelement (27) ein Material umfasst, das eine Mohs-Härte von 7 oder mehr aufweist.

8. Sensor nach einem der vorstehenden Ansprüche, ferner umfassend eine Hülse (35), die angeordnet ist, um das Erfassungselement (27) zu tragen.

9. Sensor nach einem der vorstehenden Ansprüche, ferner umfassend ein Gehäuse (36, 37), in dem die Strahlungsquelle (25) und der Detektor (26) aufgenommen sind.

10. Sensor nach Anspruch 9, wobei das Gehäuse eine Kopfplatte (36) und eine Kappe (37) umfasst, die zusammenwirken, um ein Innenvolumen zu definieren, wobei die Strahlungsquelle (25) und der Detektor (26) auf einer Oberfläche der Kopfplatte (36) montiert sind und das Erfassungselement (27) einen Teil der Kappe (37) bildet.

11. Sensor nach Anspruch 9 oder Anspruch 10, wobei das Gehäuse (36, 37) hermetisch abgedichtet ist.

12. Sensor nach einem der vorstehenden Ansprüche, ferner umfassend ein oder mehrere Umgebungsbedingungserfassungselemente, die betriebsfähig sind, um ein Signal auszugeben, das eine oder mehrere Umgebungsbedingungen angibt.

13. Sensor nach einem der vorstehenden Ansprüche, wobei eine Fläche der Erfassungsoberfläche (28) um einen Faktor vier oder mehr größer als die Fläche der Öffnung (30) ist, die sich durch den Detektor (26) erstreckt.

14. Bohrloch-Erfassungsbaugruppe (10), umfassend:
einen Körper (11) und
mindestens einen Sensor (24) nach einem der vorstehenden Ansprüche, der am Körper angebracht ist.

15. Öl-oder Gasquelle, umfassend:
ein Bohrloch und
eine Bohrloch-Erfassungsbaugruppe (10) nach Anspruch 14, die innerhalb des Bohrlochs angeordnet ist.

## Revendications

1. Capteur (24) pour mesurer une propriété, le capteur comprenant :
une source de rayonnement (25) pouvant fonctionner pour produire un faisceau de rayonnement ;
un détecteur (26) muni d'une surface de détection (28) pour recevoir un rayonnement et émettre un signal en fonction du rayonnement reçu ; et
un élément de détection (27) pouvant fonctionner pour recevoir un rayonnement et pour réfléchir au moins une partie du rayonnement de manière à former un faisceau de rayonnement réfléchi, une ou plusieurs propriétés du faisceau de rayonnement réfléchi dépendant d'une ou plusieurs propriétés à mesurer ;
**caractérisé par** une ouverture (30) s'étendant à travers le détecteur (26) depuis la surface de détection (28) jusqu'à une surface opposée ; et
dans lequel la source de rayonnement (25) et l'élément de détection (24) sont disposés sur des côtés opposés du détecteur (26) de sorte que la source de rayonnement (25) est agencée pour diriger le faisceau de rayonnement à travers l'ouverture (30) vers l'élément de détection (27) et l'élément de détection (27) est agencé pour diriger le faisceau de rayonnement réfléchi vers la surface de détection du détecteur (26).

2. Système selon la revendication 1, dans lequel la source de rayonnement (25) comprend une diode laser.

3. Capteur selon l'une quelconque des revendications précédentes, dans lequel le détecteur (26) comprend une photodiode.

4. Capteur selon l'une quelconque des revendications précédentes, dans lequel l'élément de détection (27) est un guide d'ondes comprenant une première extrémité (32) et une deuxième extrémité (33) agencées de sorte qu'au moins une partie du rayonnement incident sur la première extrémité (32) se propage le long de l'élément de détection (27) vers la deuxième extrémité (33), est réfléchie depuis la deuxième extrémité (33), revient vers la première extrémité (32) et est émise depuis l'élément de détection (27).

5. Capteur selon la revendication 4, dans lequel l'élément de détection (27) comprend une pointe de détection (34) disposée au niveau de la deuxième extrémité (33).

6. Capteur selon l'une quelconque des revendications précédentes, dans lequel l'élément de détection (27) comprend un saphir, un diamant, un rubis ou du verre.

7. Capteur selon l'une quelconque des revendications précédentes, dans lequel l'élément de détection (27) comprend un matériau ayant une dureté de Mohs de 7 ou plus.

8. Capteur selon l'une quelconque des revendications précédentes, comprenant en outre une virole (35) agencée pour supporter l'élément de détection (27).

9. Capteur selon l'une quelconque des revendications précédentes, comprenant en outre un boîtier (36, 37) à l'intérieur duquel la source de rayonnement (25) et le détecteur (26) sont reçus.

10. Capteur selon la revendication 9, dans lequel le boîtier comprend une plaque supérieure (36) et un capuchon (37) qui coopèrent pour définir un volume interne, la source de rayonnement (25) et le détecteur (26) étant montés sur une surface de la plaque supérieure (36) et l'élément de détection (27) faisant partie du capuchon (37).

11. Capteur selon la revendication 9 ou la revendication 10, dans lequel le boîtier (36, 37) est scellé hermétiquement.

12. Capteur selon l'une quelconque des revendications précédentes, comprenant en outre un ou plusieurs éléments de détection de conditions ambiantes pouvant fonctionner pour émettre un signal indicatif d'une ou plusieurs conditions ambiantes.

13. Capteur selon l'une quelconque des revendications précédentes, dans lequel une zone de la surface de détection (28) est un facteur de quatre fois ou plus supérieur à la surface de l'ouverture (30) qui s'étend à travers le détecteur (26).

14. Ensemble de détection de fond de puits (10), comprenant :
un corps (11) ; et
au moins un capteur (24) selon l'une quelconque des revendications précédentes monté sur le corps.

15. Puits de pétrole ou de gaz comprenant :
un puits de forage ; et
un ensemble de détection de fond de puits (10) selon la revendication 14 disposé à l'intérieur du puits de forage.
